(19) Europäisches Patentamt
European Patent Office
Office européen des brevets

(11) EP 0 887 374 A1

(12) **DEMANDE DE BREVET EUROPEEN**

(43) Date de publication:
**30.12.1998 Bulletin 1998/53**

(51) Int. Cl.[6]: **C08K 5/17**, C08L 23/02

(21) Numéro de dépôt: **98111115.6**

(22) Date de dépôt: **17.06.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **24.06.1997 FR 9707857**

(71) Demandeur: **ELF ATOCHEM S.A.**
**92800 Puteaux, Hauts-de-Seine (FR)**

(72) Inventeurs:
- **Drujon, Xavier**
  **64110 Jurancon (FR)**
- **Claverie, Francis**
  **64300 Bonnut (FR)**
- **Lotz, Bernard**
  **67000 Strasbourg (FR)**
- **Wittman, Jean-Claude**
  **67370 Pfulgriesheim (FR)**
- **Thierry, Annette**
  **67200 Strasbourg (FR)**

(54) **Composition de résine synthétique polyoléfine contenant un agent nucleant clarifiant**

(57) L'invention concerne une composition de résine synthétique contenant au moins un agent clarifiant choisi dans le groupe constitué par les diphénylglycines.

EP 0 887 374 A1

## Description

La présente invention concerne des compositions de résines synthétiques polyoléfiniques ayant une transparence et des propriétés mécaniques améliorées comprenant au moins un agent clarifiant.

On sait que les polymères oléfiniques présentent une structure cristalline qui leur confère certaines propriétés mécaniques particulières très appréciées dans de nombreuses applications industrielles (emballage, flaconnage), mais aussi une opacité gênante lorsque l'application requiert une épaisseur importante de polymère.

Ces propriétés mécaniques et optiques dépendent dans une large mesure de la microstructure du polymère. En général, le polymère fondu se cristallise en refroidissant sous forme de sphérolites, lesquels comprennent des domaines amorphes et cristallins.

On sait que l'emploi de certains agents dits de "nucléation" désignés communément agents nucléants favorise la création des germes de cristallisation supplémentaires au cours du refroidissement d'un polymère.

Cette augmentation des germes de cristallisation produit un plus grand nombre de sphérolites ce qui entraîne une réduction de leur dimension et permet d'augmenter la température de cristallisation.

Ces agents nucléants sont plus particulièrement utilisés dans les résines synthétiques polyoléfines polypropylène homopolymère ou copolymère.

Parmi les agents nucléants, on peut distinguer les agents nucléants inorganiques et les agents nucléants organiques.

Parmi les agents nucléants inorganiques, on trouve le talc et d'autres silicates, les sels de sodium ou d'aluminium d'acide benzoïque ou de ses dérivés, ou les sels d'acides organophosphoriques cycliques tels que ceux décrits dans le brevet US 5342868.

L'utilisation de ces agents nucléants présente de nombreux inconvénients. Tout d'abord, l'efficacité de l'agent nucléant dépend de la taille des particules de l'agent et de son degré de dispersion dans le polymère. Les agents inorganiques doivent avoir une taille de particule extrêmement faible et être dispersés de façon uniforme pour être efficaces. On utilise typiquement de l'ordre de 0,1 % à 1 % en poids de ces composés pour améliorer les propriétés mécaniques ou les cadences de production.

En raison de leur insolubilité dans le polymère fondu lors de la mise en oeuvre, il est extrêmement difficile d'améliorer la transparence d'une composition polyoléfinique à l'aide de ces composés.

Parmi les agents nucléants organiques, on trouve les dérivés du sorbitol et des polymères à haute température de fusion, tels le polyvinyle cyclohexane décrit dans le brevet EP 0206515. Ces polymères, bien qu'étant efficaces à des taux d'incorporation très faibles (0,001 % en poids), présentent les mêmes problèmes que les agents inorganiques lorsqu'il s'agit d'améliorer la transparence d'une composition polyoléfinique.

Les dérivés du sorbitol, appelés indifféremment agents nucléants ou agents clarifiants, sont les seuls qui permettent d'obtenir invariablement, en plus des propriétés énoncées ci-dessus, une amélioration de la transparence du matériau. Par agent clarifiant, on désigne un agent nucléant qui confère à la matière polymérique une transparence améliorée. Ces composés sont fusibles ou solubles à la température de transformation de la polyoléfine, mais recristallisent avant le polymère.

Cependant, l'utilisation des dérivés du sorbitol n'est pas sans inconvénients. Il est nécessaire d'incorporer au polymère à modifier une quantité assez importante d'agent clarifiant. On observe une amélioration notable de la transparence à partir d'un taux supérieur à 1000 ppm et on obtient les propriétés maximales vers 2500 ppm. Ceci entraîne un certain nombre de complications dues à l'étroite fenêtre de processabilité de ces composés.

Si la température de transformation est trop basse, il y a des infondus et si la température de transformation est trop haute, il y a décomposition.

Ces dérivés du sorbitol présentent également de nombreux autres inconvénients tels que goût, odeur, dépôt sur outillage de transformation surtout en injection soufflage, faible résistance au rayon gamma et faible résistance au choc à basse température qui entraînent respectivement jaunissement et fragilisation des polymères les contenant.

Le brevet FR 2656620 concerne des compositions de résines polyoléfiniques contenant au moins un composé choisi dans le groupe constitué par des amino-acides, des imino-acides et des acides pyridine-, quinoleine- et acridine-carboxyliques.

Tous ces composés permettent d'augmenter la température de cristallisation des compositions de résines polyoléfioniques les contenant mais ceci est obtenu sans amélioration notable de la transparence desdites compositions.

La demanderesse a trouvé de façon tout-à-fait inattendue que cette transparence pouvait être augmentée si on utilisait certains de ces composés à très faibles teneurs.

L'objet de la présente invention concerne donc des compositions de résines synthétiques polyoléfiniques, comprenant au moins une résine synthétique polyoléfinique, et au moins un agent clarifiant, caractérisé en ce que l'agent clarifiant est choisi dans le groupe constitué par les diphénylglycines de formule :

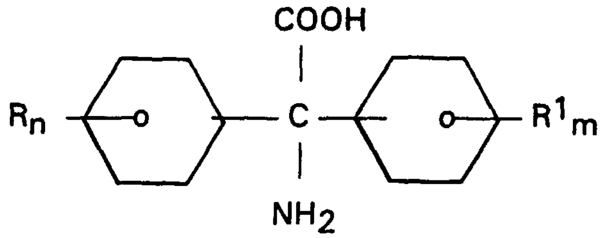

(I)

dans laquelle R et R1, identiques ou différents, représentent des restes alkyle, linéaires ou ramifiés, ayant un nombre de carbone allant de 1 à 10, des atomes d'halogène tels que F, Cl, Br, des restes monovalents tels que HO-, $R^2S$-, $R^2CO_2$-, $R^2O$-, $R^2$ ayant la même signification que R ou $R^1$ ; n et m, identiques ou différents représentent des nombres entiers allant de 0 à 5, et que l'on utilise, une quantité dudit agent clarifiant allant de 0,001 % à 0,30 % en poids par rapport au poids total de la résine synthétique polyoléfinique pour obtenir un taux d'efficacité en nucléation au moins égal à 50 %, une diminution du Haze (ou voile de transmission) au moins égale à 10 et une augmentation du module de flexion.

Parmi les composés de formule (I), on préfère ceux dans lesquels n = m = o ou ceux dans lesquels n = m = 1 et R = $R^1$ = $CH_{3}$- ou $C_2H_5$.

Parmi ces composés, on citera plus particulièrement la 2,2-diphenylglycine.

L'invention concerne' l'application de composés de formule (I) comme agents clarifiants qui diminuent le Haze des résines synthétiques oléfiniques et plus particulièrement des polypropylènes avec un taux d'efficacité en nucléation au moins égal à 50 % tout en augmentant le module de flexion et la transparence. Le taux d'efficacité en nucléation exprimé en %, permet de comparer quantitativement des agents clarifiants à différents taux dans une matrice polymère donnée.

Il réflète la capacité d'un agent clarifiant à augmenter la température de cristallisation de la matrice polymère à une vitesse de refroidissement donnée. Le taux d'efficacité en nucléation est défini par la relation :

$$TE = 100 \times \frac{T_{CNA} - T_{C1}}{T_{C2MAX} - T_{C1}}$$

dans laquelle :

$T_{C1}$ est la température de cristallisation mesurée selon la méthode DSC à -10°C/min de la résine synthétique polyoléfinique ne contenant pas d'agent clarifiant ;
$T_{CNA}$ est la température de cristallisation mesurée par la même méthode DSC à -10°C/min de la résine synthétique polyoléfinique contenant l'agent clarifiant de la présente invention, et
$T_{C2MAX}$ est la température maximale de cristallisation de la résine synthétique polyoléfinique, déterminée par la méthode dite d'autoensemencement.

Cette méthode d'autoensemencement consiste à faire subir à la résine synthétique polyoléfinique le cycle thermique comprenant les étapes suivantes :

a) annulation de "l'histoire thermique" par une première montée en température, 30°C au-dessus de la température de fusion de la résine synthétique polyoléfinique ;
b) formation d'un état de cristallisation standard, par refroidissement à une vitesse constante (10°C/min) et ce, jusqu'à une température constante, en l'occurence 50°C. Le temps de séjour est fixé à 5 minutes ; au cours de ce refroidissement, il apparaît un pic de cristallisation dont le maximum se situe à une température $T_{C1}$ caractéristique de la résine étudiée car elle ne dépend que du nombre de germes résiduels ;
c) fusion partielle contrôlée par chauffe à une vitesse constante de + 10°C/min de 50°C à une température Ts pendant un temps de séjour ts égal à 5 minutes,
d) seconde cristallisation réalisée par un refroidissement à vitesse constante de 10°C/min.

Au cours de ce refroidissement, on obtient le pic de cristallisation dont le sommet est situé à une température $T_{C2}$.

La courbe de fusion d'un polymère permet de localiser rapidement le domaine d'autoensemencement, c'est-à-dire les températures Ts qui entraînement la conservation d'un grand nombre de germes résiduels de polymère.

Les figures 1 et 2 représentent les courbes de fusion d'un échantillon "brut" et d'un échantillon obtenu après recristallisation. Sur ces figures, on représente en abscisse les températures en °C et en ordonnée le flux de chaleur en millicalorie/seconde (mcal/s) et on définit :

- un domaine I : $T \geq Ts_1$.

Ce domaine correpsond à la fusion totale. Quelle que soit la température de séjour T, le Tc exothermique au refroidissement ultérieur a son maximum à $T_{C1}$, qui est défini par la concentration de germes hétérogènes (catalyseurs...) présents ;

- un domaine II : $Ts_2 \geq Ts < Ts_1$.

Dans ce domaine, la température de cristallisation augmente progressivement lorsque la température Ts passe de Ts1 à Ts2. En règle générale, un petit écart de Ts se traduit dans ce domaine par des différences considérables dans les températures Tc. Comme la vitesse de refroidissement utilisée est identique pour toutes les expériences, on doit admettre que la variation de Tc entre $T_{C1}$ et $T_{C2}$ reflète uniquement l'augmentation progressive de la concentration des germes, c'est-à-dire des fragments cristallins créés par l'autoensemencement. A la limite supérieure de $T_{C2MAX}$, cette concentration de germes atteint une valeur telle que la Tc n'évolue plus ;

- un domaine III : $Ts < Ts_2$.

Dans ce domaine, la chauffe de l'échantillon à des températures inférieures à $Ts_2$ résulte en une fusion très incomplète qui s'accompagne d'un recuit (meilleure organisation, épaississement des lamelles).

Cette fusion incomplète est révélée par le fait que la recristallisation est immédiate et par une diminution de l'enthalpie de cristallisation. Lors de la fusion ultérieure, le recuit effectué à Ts inférieure à $Ts_2$ se traduit par l'apparition d'un second pic à haute température.

Le comportement décrit ci-dessus est générique pour tous les polymères semi-cristallins.

Un taux d'efficacité en nucléation de 0 % correspond au polymère non nucléé.

Un taux d'efficacité en nucléation de 100 % correspond au polymère nucléé par le plus efficace des agents nucléants pour ce polymère, soit des cristallites du polymère lui-même, obtenus par autoensemencement.

Par résine synthétique polyoléfinique, on désigne présentement tous les polymères de monooléfine qui répondent à la formule CH2 = CH - W dans laquelle W représente un atome d'hydrogène, un radical hydrocarboné substitué ou non ayant un nombre de carbone allant de 1 à 10.

A titre d'illustration des polyoléfines, on citera plus particulièrement les homopolymères de l'éthylène, du propylène et du butène-1, les copolymères d'éthylène et de propylène ayant une proportion molaire d'éthylène compris entre 0,5 et 30 % et de préférence entre 1 et 5 %, les copolymères blocs d'éthylène et de propylène ayant une proportion molaire d'éthylène comprise entre 1 % et 10 %.

Les agents clarifiants selon l'invention sont incorporés entre 0,001 % et 0,30 % en poids par rapport au poids total de la résine polyoléfinique et, de préférence entre 0,01 % et 0,15 %.

Les résines synthétiques oléfiniques sont sensibles au cisaillement et à l'oxydation lorsqu'elles sont soumises aux températures élevées nécessaires à leurs transformation. De plus, elles peuvent contenir des résidus catalytiques qui génèrent du gaz HCl à haute température, ce qui entraîne une corrosion prématurée du matériel de transformation.

A cet effet, on les formule à l'aide d'agents antioxydants et de pièges anti acides tels que les hydrotalcites.

Les compositions selon l'invention peuvent renfermer également d'autres additifs tels que des pigments, des colorants, des stabilisants vis-à-vis des rayons ultraviolets, des agents de démoulage, des agents lubrifiants.

Les compositions de résine polyoléfinique selon l'invention peuvent être préparées par exemple en mélangeant à sec les granulés ou les poudres de polymère, un ou plusieurs composés selon l'invention, ainsi qu'éventuellement les divers additifs à température ambiante pendant une durée qui peut atteindre 1 heure.

Ce mélange à sec est avantageusement suivi d'une extrusion/granulation pour obtenir une bonne dispersion des additifs à une température pouvant être comprise entre 170°C et 230°C puis moulé, par exemple par injection à une température généralement de l'ordre de 190°C à 250°C.

Les compositions selon l'invention présentent l'avantage d'avoir un faible Haze ce qui permet de les utiliser dans des domaines tels que l'emballage et le flaconnage. Par rapport aux dérivés du sorbitol communément utilisés pour ce type d'applications, les compositions selon l'invention présentent les avantages suivants :

- migration dans les fluides alimentaires limitée par le faible taux de l'agent clarifiant utilisé,
- pas d'odeur particulière due au produit, à ses impuretés et aux éventuels produits de décomposition,
- peu de dépôt en injection soufflage, toujours en raison de la faible quantité de produit requise.

Les exemples qui suivent illustrent l'invention.

➢ ***PREPARATION DES COMPOSITIONS SELON L'INVENTION :***

Les compositions ont été préparées en utilisant les matières suivantes :

- poudre d'un homopolymère du propylène PI ayant un indice de fluidité de 2g/10 min (charge 2,16 kg à 230°C) ;
- poudre d'un copolymère propylène-éthylène P2 ayant une proportion molaire d'éthylène égale à 2,5 % et ayant un indice de fluidité de 3 g/min (charge 2,16 kg à 230°C) ;
- un mélange d'IRGAFOS168 (1 partie) qui est le tris(ditert-butyl-2,4phényl)-phophite et d'IRGANOX1010 (1 partie) qui est un phénol encombré commercialisé par la Société CIBA-GEIGY sous la dénomination IRGANOX®B225 utilisé comme antioxydant ;
- une hydrotalcite de formule $Mg_{4,5}Al_2(OH)_{13}CO_{3,5}H_20$ commercialisé par la société KYOWA CHEM.IND. sous la dénomination DHT4A utilisé comme anti-acide ;
- la 2,2-diphényl glycine (ci-après désignée par DPG).

Préparation :

(Les pourcentages indiqués sont exprimés en poids par rapport au poids total de la résine polyoléfinique).
On mélange au sac à sec pendant 2 à 5 minutes :

- une poudre de polypropylène P1 ou P2,
- 0,150 % d'IRGANOX B225,
- 0,030 % d'hydrotalcite DHT4A,
- x % de DPG.

On alimente ensuite avec ce mélange une extrudeuse bi-vis contrarotative HAAKE Rheocord-System, avec une vitesse de 35 à 40 tours par minute ayant le profil de température suivant : 190°C - 210°C - 220°C - 230°C, et une température de filière de 215°C.

Les granulés obtenus sont moulés par injection à 230°C sur une presse BILLION VISUMAT 5001 (90 tonnes) en éprouvettes normalisées pour effectuer les mesures de Haze et de flexion.

Le taux d'efficacité TE est déterminé sur les granulés avant injection.

- Le Haze exprimé en pourcentage est déterminé selon la norme ASTM D 1003 sur des pièces de 1,5 mm d'épaisseur.

Le module de flexion exprimé en MPa est déterminé selon la norme ISO 178 sur des épouvettes de dimensions 120 x 10 x 4 mm avec une charge de 0,45 MPa.

Le taux d'efficacité TE, exprimé en % et défini par la relation :

$$TE = 100 \times \frac{T_{CNA} - T_{C1}}{T_{C2MAX} - T_{C1}}$$

dans laquelle $T_{CNA}$, $T_{C1}$ et $T_{C2MAX}$ ont été définis ci-avant, a été déterminé par DSC (Differential Scarning Calorimetry) sur un appareil PERKIN-ELMER THERMAL ANALYSIS SYSTEM.

- $T_{C1}$ et $T_{CNA}$ ont été mesurées avec une vitesse de 10°C/min.
- $T_{C2MAX}$ a été déterminée par autoencensement, comme décrit ci-avant.

Pour l'homopolymère du propylène P1 : $T_{C1}$ = 118°C et $T_{C2MAX}$ = 134°C.
Pour le copolymère éthylène-propylène P2 : TC1 = 105°C et $T_{C2MA}$ = 127°C.
Dans le tableau 1, on rapporte les résultats obtenus avec l'homopolymère du propylène P1.
Dans le tableau 2, on rapporte les résultats obtenus avec le copolymère éthylène-propylène P2.

TABLEAU 1

| DPG (%) | TcNA (°C) | TE (%) | HAZE (%) | MODULE DE FLEXION (MPA) |
|---|---|---|---|---|
| 0 | 118 | - | 62 | 1050 |
| 0,010 | 130,8 | 51,2 | 45 | |
| 0,015 | 131,1 | 52,4 | 40 | 1350 |
| 0,025 | 131,5 | 54 | 33 | |
| 0,050 | 131,7 | 54,8 | 32 | 1450 |
| 0,100 | 132,5 | 58 | 30 | |
| 0,150 | 133 | 60 | 28 | 1560 |
| 0,200 | 132,7 | 58,8 | 29 | |
| 0,250 | 132,8 | 59,2 | 30 | |

TABLEAU 2

| DPH (%) | TcNA (°C) | TE (%) | HAZE (%) | MODULE DE FLEXION (MPA) |
|---|---|---|---|---|
| 0 | 105 | 0 | 47 | 850 |
| 0,010 | 117,9 | 58,6 | 36 | |
| 0,025 | 117,8 | 58,2 | 32 | 860 |
| 0,050 | 118,8 | 62,7 | 30 | 840 |
| 0,075 | 119,9 | 67,7 | 29 | |
| 0,100 | 120,3 | 69,5 | 27 | |
| 0,150 | 120,3 | 69,5 | 28 | 940 |
| 0,200 | 120,4 | 70 | 29 | |

Dans le tableau 3, on rapporte les résultats obtenus avec l'homopolymère au propylène P1 contenant des agents nucléants décrits dans le brevet FR 5 656 620.

TABLEAU 3

| AGENT NUCLEANT | TENEUR (%) | HAZE (%) |
|---|---|---|
| Thymine | 0,25 | 70 |
| Acide 4-quinoline carboxylique | 0,25 | 62 |
| Acide 4,4-biphenyl-carboxylique | 0,25 | 70 |
| Acide naphtoïque | 0,25 | 70 |
| Acide 3-coumarine carboxylique | 0,30 | 75 |

**Revendications**

**1.** Composition de résine synthétique polyoléfinique, comprenant au moins une résine synthétique polyoléfinique, et au moins un agent clarifiant, caractérisé en ce que l'agent clarifiant est choisi dans le groupe constitué par les

diphénylglycines de formule :

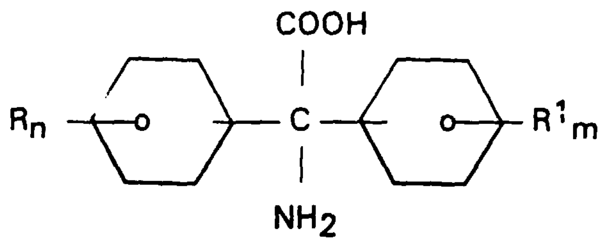

(I)

dans laquelle R et R1, identiques ou différents, représentent des restes alkyle, linéaires ou ramifiés, ayant un nombre de carbone allant de 1 à 10, des atomes d'halogène tels que F, Cl, Br, des restes monovalent tels que HO-, $R^2S$-, $R^2CO_2$-, $R^2O$-, $R^2$ ayant la même signification que R ou $R^1$ ; n et m, identiques ou différents représentent des nombres entiers allant de 0 à 5, et que l'on utilise, une quantité dudit agent clarifiant allant de 0,001 % à 0,30 % en poids par rapport au poids total de la résine synthétique polyoléfinique pour obtenir un taux d'efficacité en nucléation au moins égal à 50 %, une diminution du Haze (ou voile de transmission) au moins égale à 10 et une augmentation du module de flexion.

2. Composition selon la revendication 1, caractérisée en ce que dans l'agent clarifiant de formule (I) $R = R^1 = CH_{3-}$ ou $C2H_{5-}$ et n = m = 0 ou 1.

3. Composition selon l'une des revendications 1 ou 2 dans laquelle l'agent clarifiant de formule (I) est la 2,2-diphenylglycine.

4. Composition selon l'une quelconque des revendications 1 à 3, caractérisée en ce que la résine synthétique polyoléfinique est un homo- ou copolymère de monooléfine de formule $CH_2$ = CH - W dans laquelle W représente un atome d'hydrogène, un radical hydrocarboné substitué ou non ayant un nombre de carbone allant de 1 à 10.

5. Composition selon la revendication 4, caractérisée en ce que la résine synthétique polyoléfinique est un homopolymère du propylène.

6. Composition selon la revendication 4, caractérisée en ce que la résine synthétique polyoléfinique est un copolymère d'éthylène et de propylène, ou un copolymère bloc d'éthylène et de propylène.

7. Composition selon la revendication 6, caractérisée en ce que le copolymère d'éthylène et de propylène contient une proportion molaire d'éthylène allant de 0,5 % à 30 % et de préférence de 1 % à 5 %.

8. Composition selon la revendication 6, caractérisée en ce que le copolymère bloc d'éthylène et de propylène contient une proportion molaire d'éthylène comprise entre 1 % et 10 %.

9. Composition selon les revendications 1 à 8, caractérisée en ce qu'elle comprend 0,01 % à 0,15 % d'agent clarifiant de formule (I) par rapport au poids de la résine polyoléfinique.

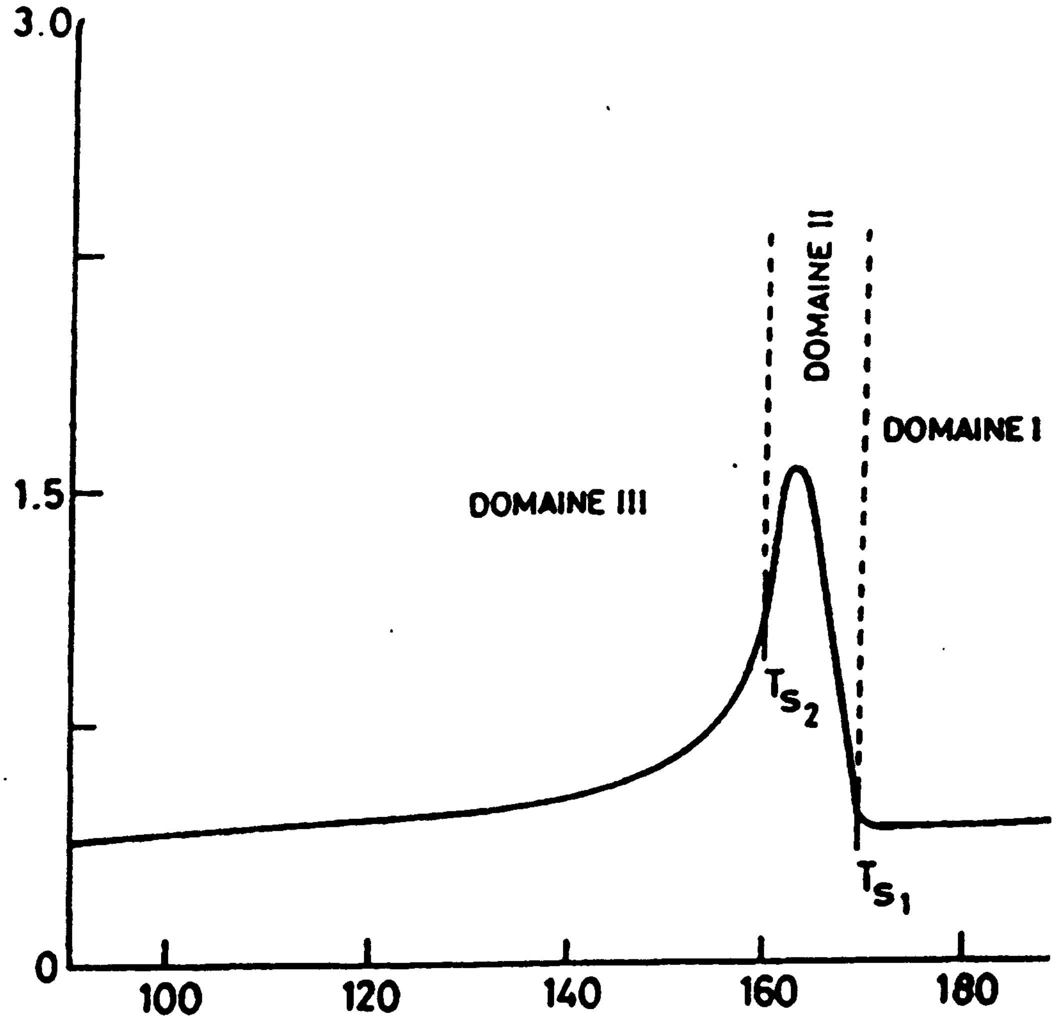
3.0
1.5
0
DOMAINE III
DOMAINE II
DOMAINE I
$T_{S_2}$
$T_{S_1}$
100
120
140
160
180

FIGURE 1

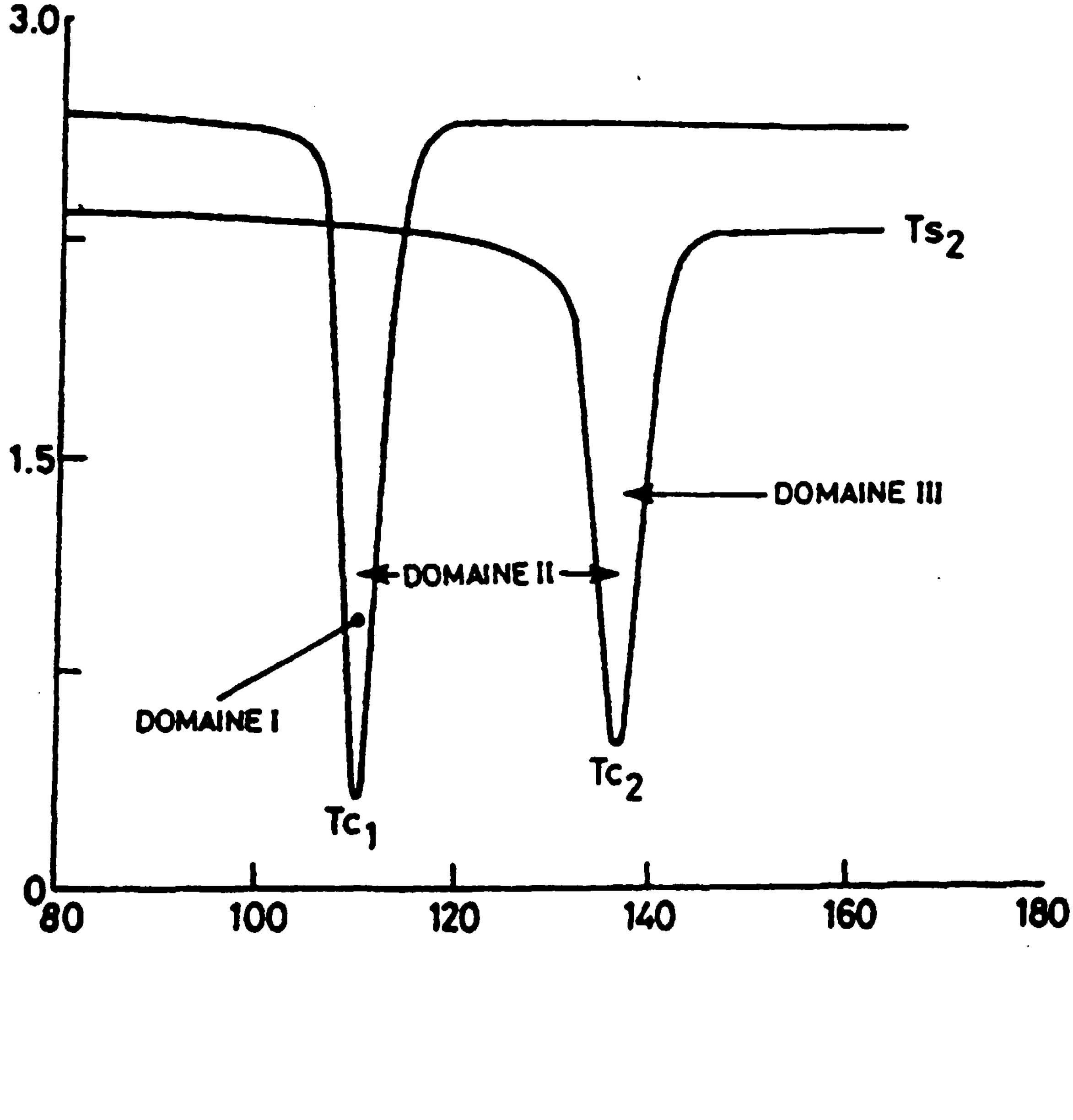
3.0
1.5
0
80
100
120
140
160
180
Ts2
DOMAINE III
DOMAINE II
DOMAINE I
Tc1
Tc2

FIGURE 2

Office européen des brevets

# RAPPORT DE RECHERCHE EUROPEENNE

Numéro de la demande
EP 98 11 1115

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,X | FR 2 656 620 A (M & T CHEMS.)<br>5 juillet 1991<br>* exemple ESSAI10; tableau 2 *<br>--- | 1,3 | C08K5/17<br>C08L23/02 |
| X | FILLON ET AL.: "Self-nucleation and enhanced nucleation of polymers..."<br>JOURNAL OF POLYMER SCIENCE, POLYMER PHYSICS EDITION.,<br>vol. 31, no. 10, 1993, pages 1395-1405,<br>XP002054321<br>NEW YORK US<br>* page 1402, colonne 1, alinéa 1 *<br>----- | 1,3 | |

| DOMAINES TECHNIQUES RECHERCHES (Int.Cl.6) |
|---|
| C08K |

Le présent rapport a été établi pour toutes les revendications

| Lieu de la recherche | Date d'achèvement de la recherche | Examinateur |
|---|---|---|
| LA HAYE | 8 octobre 1998 | Engel, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)